# EUROPEAN PATENT SPECIFICATION

(11) **EP 4 135 967 B1**
(45) Date of publication and mention of the grant of the patent: **27.09.2023**
(21) Application number: 21716470.6
(22) Date of filing: 09.04.2021
(51) Int. Cl.: B29C 64/118, B33Y 10/00, B33Y 80/00, F21V 1/14, F21V 1/26, F21V 3/00

(54) **3D-PRINTED METHOD FOR PRODUCING AN OPTICAL ITEM FOR A LIGHTING DEVICE**
3D-GEDRUCKTES VERFAHREN ZUR HERSTELLUNG EINES OPTISCHEN ELEMENTS FÜR EINE BELEUCHTUNGSVORRICHTUNG
MÉTHODE D'IMPRESSION EN 3D POUR LA PRODUCTION D'UN ÉLÉMENT OPTIQUE POUR UN DISPOSITIF D'ÉCLAIRAGE

(30) Priority: 16.04.2020 EP 20169737
(43) Date of publication of application: 22.02.2023
(73) Proprietor: Signify Holding B.V., 5656 AE Eindhoven (NL)
(72) Inventor: VAN OS, Jacobus, Petrus, Johannes, 5656 AE Eindhoven (NL); HIKMET, Rifat, Ata, Mustafa, 5656 AE Eindhoven (NL)
(74) Representative: Verweij, Petronella Daniëlle
(86) International application number: PCT/EP2021/059339
(87) International publication number: WO 2021/209344

(56) References cited:
- EP-A1- 3 496 088
- WO-A1-2020/048889
- WO-A2-03/082550
- US-A1- 2015 266 235
- US-A1- 2019 030 822

## Description

### FIELD OF THE INVENTION

The invention, as disclosed in claim 1, relates to a method for manufacturing a 3D (printed) item. The invention, as disclosed in claim 7, also relates to the 3D (printed) item obtainable with such method. Further, the invention relates to a lighting device including such 3D (printed) item.

### BACKGROUND OF THE INVENTION

The 3D printing articles including patterns is known in the art. US2016/025703 and US 2015/266235 A1 describe a three-dimensional part printed using an additive manufacturing technique. The three-dimensional part includes an outer wall having an outer surface defining a shape of a part and in interior surface defining an interior cavity. The part includes a plurality of first sections having a plurality of printed layers, each printed layer of the first section having a plurality of wall segments that form triangle shaped cells wherein each of the plurality of first sections are attached to the interior surface of the outer wall. The part includes a plurality of second sections having a plurality of printed layers, each printed layer of the second section having a plurality of wall segments that form hexagram shaped cells of hexagons and triangles, wherein each of the plurality of second printed sections are attached to the interior surface of the outer wall and wherein the first and second sections are in an alternating pattern, wherein when adjacent printed layers of the first and second sections are printed a wall segment of a cell defining a triangle bisect the hexagon shaped cell.

### SUMMARY OF THE INVENTION

Within the next 10-20 years, digital fabrication will increasingly transform the nature of global manufacturing. One of the aspects of digital fabrication is 3D printing. Currently, many different techniques have been developed in order to produce various 3D printed objects using various materials such as ceramics, metals and polymers. 3D printing can also be used in producing molds which can then be used for replicating objects.

For the purpose of making molds, the use of polyjet technique has been suggested. This technique makes use of layer by layer deposition of photo-polymerisable material which is cured after each deposition to form a solid structure. While this technique produces smooth surfaces the photo curable materials are not very stable, and they also have relatively low thermal conductivity to be useful for injection molding applications.

The most widely used additive manufacturing technology is the process known as Fused Deposition Modeling (FDM). Fused deposition modeling (FDM) is an additive manufacturing technology commonly used for modeling, prototyping, and production applications. FDM works on an "additive" principle by laying down material in layers; a plastic filament or metal wire is unwound from a coil and supplies material to produce a part. Possibly, (for thermoplastics for example) the filament is melted and extruded before being laid down. FDM is a rapid prototyping technology. Other terms for FDM are "fused filament fabrication" (FFF) or "filament 3D printing" (FDP), which are considered to be equivalent to FDM. In general, FDM printers use a thermoplastic filament, which is heated to its melting point and then extruded, layer by layer, (or in fact filament after filament) to create a three-dimensional object. FDM printers are relatively fast, low cost and can be used for printing complicated 3D objects. Such printers are used in printing various shapes using various polymers. The technique is also being further developed in the production of LED luminaires and lighting solutions.

It appears desirable to provide alternative 3D items, which may be stronger, or which may have a decorative surface, or which may be transmissive for visible light. It may be desirable to provide a 3D item that is transmissive for visible light, wherein the transmissivity may be controlled. It may also be desirable to provide a 3D item that is transmissive for visible light, but which may have a reduced glare. Hence, it is an aspect of the invention to provide an alternative 3D printing method and/or 3D (printed) item which preferably further at least partly obviate(s) one or more of above-described drawbacks. The present invention may have as object to overcome or ameliorate at least one of the disadvantages of the prior art, or to provide a useful alternative.

Amongst others, herein it is suggested in embodiments using fused deposition modelling where either the printer head or the printing stage moves vertically during the deposition of the layer. Furthermore, the head can move in the x-y plane. For example, the (vertical) movement fulfils a sinus function. In this way instead straight lines sinusoidal wavy lines can be printed. Depending on the amplitude it can also lead to the formation of holes. In addition, when a transparent filament is used desirable optical effects can be realized.

Hence, in a first aspect the invention, as disclosed in claim 1, provides method for producing a 3D item by means of fused deposition modelling, the method comprising a 3D printing stage comprising layer-wise depositing 3D printable material to provide the 3D item comprising 3D printed material. Especially, the 3D item comprises a plurality of layers of 3D printed material. In embodiments, the plurality of layers comprises a stack, wherein the stack comprises a first layer and a second layer. Hence, herein the term "layers" may especially refer to at least comprise the first layer and the second layer. These layers are especially configured adjacent to each other. More especially, these layers maybe configured on top of each other (during 3D printing). Especially, the method comprises 3D printing the first layer and subsequently the second layer while providing a plurality of modulations in a z-direction in at least one of the first and second layers. By doing so, a plurality of openings between the first and second layers (in a plane comprising the z-axis) may be defined. Hence, especially deliberately openings are created in the stack, or in the plane of the stack. Therefore, in embodiments the invention especially provides a method for producing a 3D item by means of fused deposition modelling, the method comprising a 3D printing stage comprising layer-wise depositing 3D printable material to provide the 3D item comprising 3D printed material, wherein the 3D item comprises a plurality of layers of 3D printed material, wherein the plurality of layers comprises a stack, wherein the stack comprises a first layer and a second layer (which are especially configured adj acent to each other, wherein the method comprises: 3D printing the first layer and subsequently the second layer while providing a plurality of modulations in a z-direction in at least one of the first and second layers, thereby defining a plurality of openings between the first and second layers (in a plane comprising the z-axis).

In this way, amongst others a 3D printed item with surface with a woven appearance may be provided, such as a fabric/ knitwear appearance. The layered structure may be relatively stable but may nevertheless have transmission for light. The shape and/or appearance of the structure may be controlled by controlling the length, width, number, and patterns of the deviations. Hence, in this way a (decorative) luminaire with a surface having a woven appearance may be provided. Further, with the present solution the internal buildup of stress may be reduced. Hence, overall stress in the printed object may be lower. Further, with the present invention product weight may be reduced. Yet further, with the present invention the printing speed may be increased, as more height can be realized with about the same (or less 3D printable material. For instance, luminaires with texture perforations may be created in this way.

As indicated above, the invention provides a method for producing a 3D item by means of fused deposition modelling. Especially, the method comprises a 3D printing stage comprising layer-wise depositing 3D printable material to provide the 3D item comprising 3D printed material. This 3D printed material may be provided on a receiver item. Providing the 3D printed material on the receiver item also includes providing the 3D printed material on already 3D printed material on the receiver item.

The thus provided 3D item comprises a plurality of layers of 3D printed material. The plurality of layers comprises a stack of layers. Hence, two or more of the plurality of layers, or at least parts of each of the two or more of the plurality of layers may define the stack of layers. This stack of layers comprises (at least) a first layer and a second layer, which are configured adjacent to each other. Here, the adjacent layers especially refer to stacked layers, where one layer has been deposited on top of another layer. In this way, by layer-wise depositing, a plurality of layers may be generated which are configured in a stack, and wherein each layer has one or two adjacent layers.

The layer on top is adjacent to the layer below it; likewise, the lower layer is adjacent to the layer on top (assuming a vertical orientation of the 3D item).

In general, the stack will comprise a plurality of n layers, wherein n is larger than two, especially n≥5, such as at least 10 layers (see also below). Two or more of these layers comprised by the stack may be indicated as first layers and as second layers.

Note that the term "first layer" may also refer to a plurality of essentially the same first layers. However, the term first layer" may also refer to a plurality of different first layers. The layers may differ in number of modulations, in the shape of the modulations and/or the type of the modulations, a pitch of the modulations, a layer height, etc. etc.. Likewise, the term "second layer" may also refer to a plurality of essentially the same second layers. However, the term second layer" may also refer to a plurality of different second layers. The layers may differ in number of modulations, in the shape of the modulations and/or the type of the modulations, a pitch of the modulations, a layer height, etc. etc..

Hence, in embodiments the method may comprise 3D printing a plurality of the first layers and a plurality the second layers while providing a plurality of modulations in a z-direction in a plurality of the first layers and/or the second layers. These layers may thus be stacked. Hence, the stack may comprise a plurality of the first layers and a plurality the second layers.

Herein, the invention is especially explained in relation to a set of a first layer and a second layer. In embodiments, this may thus refer to a plurality of the first layers and a plurality the second layers.

As indicated above, the method comprises 3D printing the first layer and subsequently the second layer while providing a plurality of modulations in a z-direction in at least one of the first and second layers. Hence, by moving the receiver item and/or the printer nozzle in a z-direction, instead of full contact of the 3D printed layer that is being printed on the receiver item (including an already printed layer), part of the new layer does not make physical contact (with the (adjacent) layer below). Hence, by moving up and down, contact between the first layer and second layer is temporarily lifted and reinstated. In this way, one or more, especially a plurality of openings between the first and second layers (in a plane comprising the z-axis) may be defined.

Hence, in embodiments the method may comprise moving the printer head relative to the printing stage (in the z-direction), or moving the printing stage relative to the printer head (in the z-direction), or both moving in the z-direction, such that the mutual distance is varied. Hence, due to vertically moving one or more of the receiver item and the printer nozzle during the deposition of the layer, the modulation in the z-direction may be obtained. In this way, openings between two stacked layers may be obtained. The modulation in the z-direction may thus lead to a variation in the inter-layer distance. The inter-layer distance is essentially zero at positions where the first layer and the second layer touch and is non-zero where there is an opening between the first layer and the second layer.

Assuming a plurality of layers on top of each other (with between two or more adjacent layers one or more layer openings), each layer may define a stack axis related to that layer. The stack axes together may form a (curved) plane, which may be a cross-sectional plane of the stack of layers. Hence, one or more of the stack axis may be 1D curved. Likewise, the cross-sectional plane of the stack of layers may be 1D or 2D curved. Of course, the stack axes may also be straight, without curvature, which may lead to an essentially planer cross-sectional plane of the stack of layers.

The cross-sectional plane of the stack of layers may also be seen as the plane that is determined by the print paths. The openings are created by deviations or modulations to this print path. Hence, e.g. a cylinder shaped 3D printed item also has a cylinder shaped cross-sectional plane of the stack of layers, even though modulation to the print path / stack axis may be available (in the z-direction). In such example of the cylinder, the length axis of the cylinder may be taken as z-direction, as cylinder may be printed (circular) layer by (circular) layer to provide such cylinder. Hence, the z-direction is especially the direction in which the layers are 3D printed on top of each other. Hence, especially, the method comprises 3D printing the first layer and subsequently the second layer along (respective) print paths while providing one or more print path deviations in a plane comprising the z-axis in at least one of the first and second layers relative the (respective) the print path. Instead of the term "modulation " also the term "deviation" may be applied. Hence, modulations on the print path(s) may be provided, which may provide the openings. Hence, the modulation(s) are chosen such, that there is an opening between the layers at the position of the modulation(s). Therefore, the method especially comprises 3D printing the first layer and subsequently the second layer along the print paths while providing one or more print path modulations in a plane comprising the z-axis in at least one of the first and second layers relative the print path, thereby defining one or more openings between the first and second layers.

As indicated above, the invention provides a method for producing a 3D item ("3D printed item", "item") by means of fused deposition modelling. This method will further be explained below, especially with some embodiments.

The modulations may be relatively small, like smaller than the width of the layers. However, the modulations may also be larger than the width of the layer. The amplitudes may also be smaller than the height of the layers. However, the amplitudes (of the modulations) may also be larger than the height of the layers. Especially, the amplitudes will not be larger than about 10 times the width of the layer, such as 5 times. In (other) embodiments, especially the amplitudes will also not be larger than about 10 times the height of the layer, such as 5 times. In this way, stable stacks of 3D printed layers may be obtained having openings between layers.

Further, the width at half height of such modulations may be about at least 0.5 times the width, such as at least the width. In (other) embodiments, the width at half height of such modulations may be about at least 0.5 times the height, such as at least the height. Further, especially the widths at half height will not be larger than about 10 times the width of the layer. In (other) embodiments, the widths at half height will not be larger than about 10 times the height of the layer.

Herein, the term "height" is essentially only used in relation to the thickness of the 3D printed material. As the modulations make that two layers adjacent to a layer are further away than the layer thickness or layer height, herein also the term apparent thickness or effective thickness, or apparent height or effective height may be used. The effective layer height may be defined by the extremities of the layer in the in a plane containing the z-direction and perpendicular to the axis of elongation or print path. Especially, the apparent or effective layer height, herein also indicated as H*, may be about H+A, when the amplitudes are at one side, and about H+2A when the amplitudes are at both sides. These simple equations assume that the amplitudes for the respective layer are essentially all identical.

Hence, in specific embodiments the layers have a layer width (W), wherein the plurality of the modulations have an amplitude value (A) (relative to a print path), wherein 0.5^{∗}W<A≤10^{∗}W. Even more especially, 1^{∗}W<A≤5^{∗}W. Further, in embodiments especially the plurality of the modulations have a modulation width (W1) at half amplitude values (A), wherein 0.1^{∗}W≤W1≤10^{∗}W. Even more especially, 0.5^{∗}W≤W1≤5^{∗}W. In embodiments, W≤W1≤10^{∗}W, or even about 1.2^{∗}W≤W1≤10^{∗}W, such as 1.2^{∗}W≤W1≤5^{∗}W.

Hence, in specific (other) embodiments the layers have a layer height (H), wherein the plurality of the modulations have an amplitude value (A) (relative to a print path), wherein 0.5^{∗}H<A≤10^{∗}H. Even more especially, 1^{∗}H<A≤5^{∗}H. Further, especially in (other) embodiments the plurality of the modulations have a modulation width (W 1) at half amplitude values (A), wherein 0.1^{∗}H≤W1≤10^{∗}H. Even more especially, 0.5^{∗}H≤W1≤5^{∗}H. In embodiments, H≤W1≤10^{∗}H, or even about 1.2^{∗}H≤W1≤10^{∗}H, such as 1.2^{∗}H≤W1≤5^{∗}H.

Phrases like "the layers have a layer width (W)" or "the layers have a layer height (H)", and similar phrases, may thus especially refer to the first layer and the second layer (or a plurality of first layers and a plurality of second layers). Such phrases may thus especially refer to layers comprised by the stack of layers. Likewise, the phrase "printing two or more layers each with a regular pattern comprising a plurality of the modulations" and similar phrases may especially refer to the first layers and/or second layers. Also, likewise, phrases such as "wherein the item wall comprises the plurality of layers" and similar phrases may thus especially refer to the first layer and the second layer, or, more especially a plurality of first layers and a plurality of second layers.

As indicated below, especially the width (thickness) and height of (individually 3D printed) layers may e.g. in embodiments be selected from the range of 100-5000 µm, such as 200-2500 µm, with the height in general being smaller than the width.

Note that it is not necessary that all layers have the same layer width. Neither is it necessary that all layers have the same layer height. Herein, when referring to the first and second layers, in general these layers may have essentially the same layer heights and essentially the same layer widths. However, would these differ or would especially the layer width differ, then the herein defined embodiments in relation to the amplitude and modulation width are related to the width of the respective layer. It is also not excluded that the layer width and/or layer height differ over the length of the respective layer. Herein, when referring to the first and second layers, in general these layers may have an essentially constant layer width and/or essentially constant layer height (over the respective layer length). Would this not be the case, an average value at the location of the respective deviation may be chosen.

Note that herein "first" only is used to indicate a layer, but this "first" does not mean that this layer is 3D printed first. Further, there can be a plurality of (different) first layers and (different) second layers (see also below).

In embodiments, one or more of the layers may comprise a plurality of modulations. These may be arranged at one side, or these may be arranged at two sides.

Further, the modulations may be configured in an arrangement. Yet further, (consequently), the openings may be configured in an arrangement. The arrangement may be a regular arrangement. Alternatively, the arrangement may be an irregular arrangement, such as obtainable via a random process or a pseudorandom process. The arrangement may also be a combination of an irregular and regular arrangement. A regular arrangement may provide a better control of light transmission than random arrangements, though on larger scales, this may even out.

Hence, in embodiments the method may (further) comprise 3D printing at least one of the first and second layers with a plurality of modulations, wherein (i) two or more of the print path modulations are configured symmetrical relative to the (respective) print path, and/or (ii) two or more of the print path modulations are configured asymmetrical relative to the (respective) print path.

The shape of the modulation may be a curved shape or a shape with angles, like a triangular or block shape. Other shapes may be possible as well. Further, when a plurality of modulations are available, these may be provided in different ways. For instance, in embodiments the method may comprise 3D printing at least one of the first and second layers with a plurality of (the) (print path) modulations in one or more of a block-shape way, in a zig-zag way, and in a meandering way. For course, also combinations of two or more of these may be applied. This may in embodiments e.g. provide a trapezium type shape.

When a plurality of modulations are available in a layer, these modulations are configured in a regular arrangement, such as having a predefined pitch. Hence, in the invention the layers have a layer width (W) (see also above), and the method comprises 3D printing at least one of the first and second layers with a plurality of (print path) modulations having a pitch P, and wherein 2^{∗}W≤P≤20^{∗}W, such as 2.5^{∗}W≤P≤15^{∗}W, like in embodiments 2.5^{∗}W≤P1≤10^{∗}W. Hence, in general in embodiments the layers have a layer width (W), wherein the method comprises 3D printing at least one of the layers with a plurality of the modulations having a pitch (P), wherein 2^{∗}W≤P≤20^{∗}W.

Note that when there are more than two layers in the stack, the first and the second layer may be chosen by way of example. There may be a plurality of sets of such first layer and second layer, which sets may be the same or which may be identical. The layers with modulations may be configured in a regular arrangement or an irregular arrangement, or a combination of both.

A layer with modulations may be adjacent to one or two layers having no modulations (like the former being sandwiched between the latter two). In yet other embodiments, a layer with modulations may be adj acent to one layer with modulations and adjacent to another layer without modulations. In yet other embodiments, a layer with modulation may be adjacent to two other layers with modulations (like the former being sandwiched between the latter two).

In embodiments, the stack (see also below) may comprise a plurality of first sets, wherein each set comprises a layer with modulations adjacent to one or two layers having no modulations. Alternatively or additionally, in embodiments the stack may comprise a plurality of second sets, wherein each second set comprises a layer with modulations adjacent to one layer having no modulations and adjacent to one layer having modulations. Yet further alternatively or additionally, in embodiments the stack may comprise a plurality of third sets, wherein each third set comprises a layer with modulations adj acent to two layers having modulations.

In embodiments, the method may comprise 3D printing two or more layers each with a plurality of print path modulations, wherein the print path modulations of at least two of the two or more layers are shifted relative to each other. This shift may especially be determined along one of the print paths. Would the modulations not be shifted, at essentially the same positions along the print paths, the modulations in the two or more layers may be positioned (especially when the pitches are essentially identical and would the modulations essentially identical in amplitude and width (and direction)). Hence, in specific embodiments the method may comprise 3D printing two or more layers each with a regular pattern comprising a plurality of the modulations, wherein the patterns are identical but translated relative to one another along a stack axis (SA) of one of the two or more layers.

Hence, in the invention the shift may be x*P, wherein P is the pitch of one of the layers and the shift relates to the arrangement of the deviations in another layer, which is positioned at shifted positions (relative to the reference layer with the shift P) with the shift value x*P, wherein x is not an integer value (especially larger than 0 and smaller than 1). Especially, in such embodiments the pitches of the deviations of the first layer and of the deviations of the second are essentially identical and the deviations of the first layer and of the deviations of the second may essentially be identical in amplitude and in width. In the invention, the patterns are translated relative to one another with a shift S, wherein S=x*P, wherein 0.4≤x≤0.6, such as about 0.5.

Arrangements of modulations may be in a plurality of layers. It may be desirable, or in some embodiments even necessary, that all modulations are not on top of each other. Would all modulations on top of one another along the entire stack, then there may be no opening (assuming the same shape and direction). Hence, the modulations may especially be configured such, that they create openings. This may be obtained by shifting the modulations of one layer relative to an adjacent layer. Alternatively or additionally, this may be done by alternating layers with and without modulations. Hence, in embodiments the method may comprise 3D printing two or more layers each with a plurality of (print path) modulations, wherein the layers have a layer height (H), wherein for a set of two layers, which are nearest neighboring layers of each other, each with the plurality of (print path) modulations, applies one or more of: (i) the modulations of both of the layers have a same pitch P, but the (print path) modulations of the layers are shifted relative to each other, and (ii) nearest neighboring (print path) modulations in different layers of the set of two layers have a mutual distance (d1), in embodiments of at least the layer height (H).

The invention may also allow a continuous printing. Therefore, in embodiments the method may comprises a continuous 3D printing of the at least one of the first and second layers with the one or more print path modulations. More especially, in embodiments the method comprises a continuous 3D printing of the plurality of layers with the one or more print path modulations. Hence, in embodiments the stack may be obtained with a method comprising continuous 3D printing.

For instance, in this way at least 10 layers, such as at least 13 layers, like at least 15 layers may be comprised in the herein described stack. One or more of these, especially at least about halve of these layers, such as at least 5 layers, such as at least 6 layers, like at least 7 layers, may comprise the herein described deviations.

In embodiments, a stack may define a wall ("wall element").

In the herein described invention, wall elements may be provided that allow transmission of light from one side of the wall element to the other side of the wall element. This may e.g. be useful for lamp housings or shades (see also below). Hence, in embodiments the 3D item comprises an item wall, wherein the item wall comprises the plurality of layers of 3D printed material, wherein the method may comprise providing a plurality of layers with a plurality of (print path) modulations in a (regular) arrangement to provide a (regular) arrangement of openings between both sides of the item wall.

The openings may provide channels from one side to the other. Hence, in embodiments the openings in the wall element may provide channels. Instead of the term "wall element" also the term "wall" may be applied. The term "item wall" may thus refer to a wall (element) of a 3D printed item.

Hence, in specific embodiments the 3D item may comprise an item wall, wherein the item wall comprises the plurality of layers of 3D printed material. Therefore, in specific embodiments the method may comprise providing a plurality of layers (including one or more of the first layers and one or more of the second layers) with the plurality of the openings between both sides of the item wall. In specific embodiments, the method may comprise 3D printing the plurality of modulations in a regular arrangement to provide a regular arrangement of the openings between both sides of the item wall.

For instance, in embodiments the stack may comprise a plurality of n stacked layers, wherein n≥10, wherein the stack comprises at least five sets (5322 ), each set comprising at least two layers with k≥2 openings (between stacked layers of the set), wherein the openings in the stack form a regular arrangement. Hence, each set may comprise a first layer and a second layer.

As will be clear from the above, phrases like "at least two layers with k≥2 openings" and similar phrases, may especially refer to a set of layers at least comprising the first layer and the second layer (as defined herein), or a set comprising one or more first layers and one or more second layers, or to a set comprising a plurality of first layers and a plurality of second layers.

Yet further, in specific embodiments the layers have a layer width (W), wherein the openings (of the plurality of the openings) have a cross-sectional area having an equivalent circular diameter D, wherein a shortest distance (d2) between nearest neighboring openings is selected from the range of W≤d2≤20^{∗}D, such as 1.5^{∗}W≤d2≤10^{∗}D. The equivalent circular diameter (or ECD) of an (irregularly shaped) two-dimensional shape is the diameter of a circle of equivalent area. For instance, the equivalent circular diameter of a square with side a is 2^{∗}a^{∗}SQRT(1/π). The openings may not be fully perfectly symmetrical. Hence, the cross-sectional area of the openings may be defined as the cross-sectional area of the widest irregular (or regular) shaped infinite long element that can penetrate the opening.

For instance, there may be at least one opening per 10 cm², such as at least one opening per 4 cm². In embodiments, there may be not more than 10 openings per cm², such as not more 5 openings, especially not more than about 2 openings per cm², like in embodiments about 1 opening per cm².

Especially, in embodiment the 3D item may be used for optical applications wherein it may be desirable that at least part of the 3D item is transmissive for visible light, be it natural light or artificial light. In alternative embodiments, it may be desirable that at least part of the 3D item is reflective for visible light, be it natural light or artificial light.

Reflection and/or transmission may e.g. be controlled by controlling the sizes of the openings, the number of the openings, the number of openings per area (i.e. density of the openings). Further, reflection and/or transmission may be controlled by choosing the 3D printable material and thus the 3D printed material. For instance the 3D printed material may be light absorbing, or light reflective or transmissive for light. The 3D printed material may be material including reflective particles or a dye or a pigment. The 3D printed material may be essentially transparent for visible light. The 3D printed material may also comprise core shell 3D printed material, comprising a core material and a shell material, wherein the core materials is one or more of: (i) light absorbing and (ii) reflective for visible light, and wherein the shell material is transmissive for visible light.

The materials of the core and of the shell, as well as the width of the layers, the thickness of the core and the shell, the type of light absorption strength, the reflectivity, etc., can be chosen such that the layers are transmissive for visible light. This transmission can be tuned. For instance, the thicker (W) the layers, the larger the absorption and/or reflection may be. Especially, the thicker the cores the larger the absorption and/or reflection may be. Further, absorption may be obtained with dyes and/or pigments. The higher the concentration of the dyes and/or pigments, the larger the absorption may be. Reflection may be obtained with white pigments and reflective particles (which may in general not be transmissive). The higher the concentration of the with white pigments and reflective particles, and/or the larger the reflective particles are, the larger the reflection may be. Hence, the transmission (and/or reflection) can be tuned and thus also the transmission (and/or reflection) of the 3D item or an item wall thereof. In this way, 3D items e.g. item walls may be provided that are transmissive for visible light.

Hence, in specific embodiments the 3D printed material may be transmissive for at least part of the visible light (having a wavelength selected from the range of 380-780 nm). Hence, the 3D printable material may be transmissive for at least part of the visible light.

As indicated herein, the 3D printed material may e.g. be a single material or a core-shell material. Further, the type of material may also vary over the 3D item (wall).

Therefore, transmission (and/or reflection) may be controlled by choices related to the physical properties like sizes of the openings, the number of the openings, the number of openings per area (i.e. density of the openings), but alternatively or additionally also by the 3D printed material (and 3D printable material) choice.

Hence, in specific embodiments the 3D item comprises an item wall, wherein the item wall comprises a plurality of n layers of 3D printed material, wherein is at least 2, such as especially n≥5, wherein the item wall has a transmission for visible light, in specific embodiments especially selected from the range of 5-90%, such as 10-80%, like especially 10-50%.

Note that the optical properties may also vary over the item, such as over an item wall.

The phrase at least part of the visible light of the visible light (which is essentially in the range of 380-780 nm) may refer to one or more of (i) that one or more wavelengths are transmitted and (ii) at such wavelengths less than 100% but more than 0%, such as at least 50% of the light may be transmitted. Especially transmission may be measured under perpendicular irradiation. Here, the transmission is especially due to the openings. Alternatively, part of the transmission may also be due to using 3D printable material (and thus 3D printed material) that is light transmissive. The transmission or light permeability can be determined by providing light at a specific wavelength with a first intensity to the material and relating the intensity of the light at that wavelength measured after transmission through the material, to the first intensity of the light provided at that specific wavelength to the material (see also E-208 and E-406 of the CRC Handbook of Chemistry and Physics, 69th edition, 1088-1989).

As indicated above, the method comprises depositing during a printing stage 3D printable material. Herein, the term "3D printable material" refers to the material to be deposited or printed, and the term "3D printed material" refers to the material that is obtained after deposition. These materials may be essentially the same, as the 3D printable material may especially refer to the material in a printer head or extruder at elevated temperature and the 3D printed material refers to the same material, but in a later stage when deposited. The 3D printable material is printed as a filament and deposited as such. The 3D printable material may be provided as filament or may be formed into a filament. Hence, whatever starting materials are applied, a filament comprising 3D printable material is provided by the printer head and 3D printed. The term "extrudate" may be used to define the 3D printable material downstream of the printer head, but not yet deposited. The latter is indicated as "3D printed material". In fact, the extrudate comprises 3D printable material, as the material is not yet deposited. Upon deposition of the 3D printable material or extrudate, the material is thus indicated as 3D printed material. Essentially, the materials are the same material, as the thermoplastic material upstream of the printer head, downstream of the printer head, and when deposited, is essentially the same material.

Herein, the term "3D printable material" may also be indicated as "printable material. The term "polymeric material" may in embodiments refer to a blend of different polymers, but may in embodiments also refer to essentially a single polymer type with different polymer chain lengths. Hence, the terms "polymeric material" or "polymer" may refer to a single type of polymers but may also refer to a plurality of different polymers. The term "printable material" may refer to a single type of printable material but may also refer to a plurality of different printable materials. The term "printed material" may refer to a single type of printed material but may also refer to a plurality of different printed materials.

Hence, the term "3D printable material" may also refer to a combination of two or more materials. In general, these (polymeric) materials have a glass transition temperature T_{g} and/or a melting temperature Tₘ. The 3D printable material will be heated by the 3D printer before it leaves the nozzle to a temperature of at least the glass transition temperature, and in general at least the melting temperature. Hence, in a specific embodiment the 3D printable material comprises a thermoplastic polymer having a glass transition temperature (T_{g}) and /or a melting point (Tₘ), and the printer head action comprises heating the 3D printable material above the glass transition and if it is a semi-crystalline polymer above the melting temperature. In yet another embodiment, the 3D printable material comprises a (thermoplastic) polymer having a melting point (Tₘ), and the printer head action comprises heating the 3D printable material to be deposited on the receiver item to a temperature of at least the melting point. The glass transition temperature is in general not the same thing as the melting temperature. Melting is a transition which occurs in crystalline polymers. Melting happens when the polymer chains fall out of their crystal structures, and become a disordered liquid. The glass transition is a transition which happens to amorphous polymers; that is, polymers whose chains are not arranged in ordered crystals, but are just strewn around in any fashion, even though they are in the solid state. Polymers can be amorphous, essentially having a glass transition temperature and not a melting temperature or can be (semi) crystalline, in general having both a glass transition temperature and a melting temperature, with in general the latter being larger than the former. The glass temperature may e.g. be determined with differential scanning calorimetry. The melting point or melting temperature can also be determined with differential scanning calorimetry.

As indicated above, the invention thus provides a method comprising providing a filament of 3D printable material and printing during a printing stage said 3D printable material on a substrate, to provide said 3D item.

Materials that may especially qualify as 3D printable materials may be selected from the group consisting of metals, glasses, thermoplastic polymers, silicones, etc. Especially, the 3D printable material comprises a (thermoplastic) polymer selected from the group consisting of ABS (acrylonitrile butadiene styrene), Nylon (or polyamide), Acetate (or cellulose), PLA (poly lactic acid), terephthalate (such as PET polyethylene terephthalate), Acrylic (polymethylacrylate, Perspex, polymethylmethacrylate, PMMA), Polypropylene (or polypropene), Polycarbonate (PC), Polystyrene (PS), PE (such as expanded- high impact-Polythene (or polyethene), Low density (LDPE) High density (HDPE)), PVC (polyvinyl chloride) Polychloroethene, such as thermoplastic elastomer based on copolyester elastomers, polyurethane elastomers, polyamide elastomers polyolefine based elastomers, styrene based elastomers, etc.. Optionally, the 3D printable material comprises a 3D printable material selected from the group consisting of Urea formaldehyde, Polyester resin, Epoxy resin, Melamine formaldehyde, thermoplastic elastomer, etc... Optionally, the 3D printable material comprises a 3D printable material selected from the group consisting of a polysulfone. Elastomers, especially thermoplastic elastomers, are especially interesting as they are flexible and may help obtaining relatively more flexible filaments comprising the thermally conductive material. A thermoplastic elastomer may comprise one or more of styrenic block copolymers (TPS (TPE-s)), thermoplastic polyolefin elastomers (TPO (TPE-o)), thermoplastic vulcanizates (TPV (TPE-v or TPV)), thermoplastic polyurethanes (TPU (TPU)), thermoplastic copolyesters (TPC (TPE-E)), and thermoplastic polyamides (TPA (TPE-A)).

Suitable thermoplastic materials, such as also mentioned in WO2017/040893, may include one or more of polyacetals (e.g., polyoxyethylene and polyoxymethylene), poly(C₁₋₆ alkyl)acrylates, polyacrylamides, polyamides, (e.g., aliphatic polyamides, polyphthalamides, and polyaramides), polyamideimides, polyanhydrides, polyarylates, polyarylene ethers (e.g., polyphenylene ethers), polyarylene sulfides (e.g., polyphenylene sulfides), polyarylsulfones (e.g., polyphenylene sulfones), polybenzothiazoles, polybenzoxazoles, polycarbonates (including polycarbonate copolymers such as polycarbonate-siloxanes, polycarbonate-esters, and polycarbonate-ester-siloxanes), polyesters (e.g., polycarbonates, polyethylene terephthalates, polyethylene naphtholates, polybutylene terephthalates, polyarylates), and polyester copolymers such as polyester-ethers), polyetheretherketones, polyetherimides (including copolymers such as polyetherimide-siloxane copolymers), polyetherketoneketones, polyetherketones, polyethersulfones, polyimides (including copolymers such as polyimide- siloxane copolymers), poly(C₁₋₆ alkyl)methacrylates, polymethacrylamides, polynorbornenes (including copolymers containing norbornenyl units), polyolefins (e.g., polyethylenes, polypropylenes, polytetrafluoroethylenes, and their copolymers, for example ethylene- alpha- olefin copolymers), polyoxadiazoles, polyoxymethylenes, polyphthalides, polysilazanes, polysiloxanes, polystyrenes (including copolymers such as acrylonitrile-butadiene-styrene (ABS) and methyl methacrylate-butadiene-styrene (MBS)), polysulfides, polysulfonamides, polysulfonates, polysulfones, polythioesters, polytriazines, polyureas, polyurethanes, polyvinyl alcohols, polyvinyl esters, polyvinyl ethers, polyvinyl halides, polyvinyl ketones, polyvinyl thioethers, polyvinylidene fluorides, or the like, or a combination comprising at least one of the foregoing thermoplastic polymers. Embodiments of polyamides may include, but are not limited to, synthetic linear polyamides, e.g., Nylon-6,6; Nylon-6,9; Nylon-6,10; Nylon-6,12; Nylon-11; Nylon-12 and Nylon-4,6, preferably Nylon 6 and Nylon 6,6, or a combination comprising at least one of the foregoing. Polyurethanes that can be used include aliphatic, cycloaliphatic, aromatic, and polycyclic polyurethanes, including those described above. Also useful are poly(C₁₋₆ alkyl)acrylates and poly(C₁₋₆ alkyl)methacrylates, which include, for instance, polymers of methyl acrylate, ethyl acrylate, acrylamide, methacrylic acid, methyl methacrylate, n-butyl acrylate, and ethyl acrylate, etc. In embodiments, a polyolefine may include one or more of polyethylene, polypropylene, polybutylene, polymethylpentene (and co-polymers thereof), polynorbornene (and co-polymers thereof), poly 1-butene, poly(3-methylbutene), poly(4-methylpentene) and copolymers of ethylene with propylene, 1-butene, 1-hexene, 1-octene, 1-decene, 4-methyl-l-pentene and 1-octadecene.

In specific embodiments, the 3D printable material (and the 3D printed material) comprise one or more of polycarbonate (PC), polyethylene (PE), high-density polyethylene (HDPE), polypropylene (PP), polyoxymethylene (POM), polyethylene naphthalate (PEN), styrene-acrylonitrile resin (SAN), polysulfone (PSU), polyphenylene sulfide (PPS), and semi-crystalline polytethylene terephthalate (PET), acrylonitrile butadiene styrene (ABS), poly(methyl methacrylate) (PMMA), polystyrene (PS), and styrene acrylic copolymers (SMMA).

The term 3D printable material is further also elucidated below, but especially refers to a thermoplastic material, optionally including additives, to a volume percentage of at maximum about 60%, especially at maximum about 30 vol.%, such as at maximum 20 vol.% (of the additives relative to the total volume of the thermoplastic material and additives).

The printable material may thus in embodiments comprise two phases. The printable material may comprise a phase of printable polymeric material, especially thermoplastic material (see also below), which phase is especially an essentially continuous phase. In this continuous phase of thermoplastic material polymer additives such as one or more of antioxidant, heat stabilizer, light stabilizer, ultraviolet light stabilizer, ultraviolet light absorbing additive, near infrared light absorbing additive, infrared light absorbing additive, plasticizer, lubricant, release agent, antistatic agent, anti-fog agent, antimicrobial agent, colorant, laser marking additive, surface effect additive, radiation stabilizer, flame retardant, anti-drip agent may be present. The additive may have useful properties selected from optical properties, mechanical properties, electrical properties, thermal properties, and mechanical properties (see also above).

The printable material in embodiments may comprise particulate material, i.e. particles embedded in the printable polymeric material, which particles form a substantially discontinuous phase. The number of particles in the total mixture is especially not larger than 60 vol.%, relative to the total volume of the printable material (including the (anisotropically conductive) particles) especially in applications for reducing thermal expansion coefficient. For optical and surface related effect number of particles in the total mixture is equal to or less than 20 vol.%, such as up to 10 vol.%, relative to the total volume of the printable material (including the particles). Hence, the 3D printable material especially refers to a continuous phase of essentially thermoplastic material, wherein other materials, such as particles, may be embedded. Likewise, the 3D printed material especially refers to a continuous phase of essentially thermoplastic material, wherein other materials, such as particles, are embedded. The particles may comprise one or more additives as defined above. Hence, in embodiments the 3D printable materials may comprises particulate additives.

The printable material is printed on a receiver item. Especially, the receiver item can be the building platform or can be comprised by the building platform. The receiver item can also be heated during 3D printing. However, the receiver item may also be cooled during 3D printing.

The phrase "printing on a receiver item" and similar phrases include amongst others directly printing on the receiver item, or printing on a coating on the receiver item, or printing on 3D printed material earlier printed on the receiver item. The term "receiver item" may refer to a printing platform, a print bed, a substrate, a support, a build plate, or a building platform, etc... Instead of the term "receiver item" also the term "substrate" may be used. The phrase "printing on a receiver item" and similar phrases include amongst others also printing on a separate substrate on or comprised by a printing platform, a print bed, a support, a build plate, or a building platform, etc... Therefore, the phrase "printing on a substrate" and similar phrases include amongst others directly printing on the substrate, or printing on a coating on the substrate or printing on 3D printed material earlier printed on the substrate. Here below, further the term substrate is used, which may refer to a printing platform, a print bed, a substrate, a support, a build plate, or a building platform, etc., or a separate substrate thereon or comprised thereby.

Layer by layer printable material is deposited, by which the 3D printed item is generated (during the printing stage). The 3D printed item may show a characteristic ribbed structures (originating from the deposited filaments). However, it may also be possible that after a printing stage, a further stage is executed, such as a finalization stage. This stage may include removing the printed item from the receiver item and/or one or more post processing actions. One or more post processing actions may be executed before removing the printed item from the receiver item and/or one more post processing actions may be executed after removing the printed item from the receiver item. Post processing may include e.g. one or more of polishing, coating, adding a functional component, etc... Post-processing may include smoothening the ribbed structures, which may lead to an essentially smooth surface.

Further, the invention relates to a software product that can be used to execute the method described herein. Therefore, in yet a further aspect the invention also provides a computer program product, when running on a computer which is functionally coupled to or comprised by a fused deposition modeling 3D printer, is capable of bringing about the method as described herein.

Hence, in an aspect the invention (thus) provides a software product, which, when running on a computer is capable of bringing about (one or more embodiments of) the method (for producing a 3D item by means of fused deposition modelling) as described herein.

The herein described method provides 3D printed items. Hence, the invention, as disclosed in claim 7, also provides in a further aspect a 3D printed item obtainable with the herein described method. In a further aspect a 3D printed item obtainable with the herein described method is provided.

Especially, the invention provides in an aspect a 3D item comprising 3D printed material. The 3D item comprises a plurality of layers of 3D printed material. Especially, the plurality of layers comprises a stack of a first layer and a second layer. Especially, in embodiments the first layer and the second layer are configured adjacent to each other. Further, the first layer and the second layer may be configured with a plurality of openings between the first and second layers, especially in a plane comprising the z-axis. These openings are especially due to local differences between interlayer distances (d1) between the first and second layers. Hence, in embodiments the invention especially provides a 3D item comprising 3D printed material, wherein the 3D item comprises a plurality of layers of 3D printed material, wherein the plurality of layers comprises a stack of a first layer and a second layer (which are configured adjacent to each other), with a plurality of openings between the first and second layers (especially in a plane comprising the z-axis) due to local differences between interlayer distances (d1) between the first and second layers.

In this way, an item may be provided, such as an item wall, which may allow gas such as air, pas the item. Further, an item may be provided that may allow propagation of at least part of the light that that impinges on the item through the openings.

In specific embodiments, the stack may comprise a (virtual) stack plane configured parallel to the stacking of the layers comprised by the stack wherein the plurality of openings at least partly coincide with the stack plane. As in embodiments the 3D item may be 1D or 2D curved, the stack plane may in embodiments also be 1D or 2D curved.

In specific embodiments, the stack comprises a plurality of n stacked layers, wherein n≥5, wherein the stack comprises at least five sets, each set comprising at least two layers with k≥2 openings configured in a regular arrangement. Hence, in embodiments the regular arrangements in the different sets may be the same. However, in other embodiments the regular arrangements of two or more of the at least five sets may differ from each other. They may e.g. differ in pitch, or amplitude, etc..

Hence, in specific embodiments the stack may comprise a plurality of n stacked layers, wherein n≥5, such as n≥10, wherein the stack may comprise two or more sets, each set comprising at least two layers with the openings (between stacked layers of the set), wherein the openings in the stack form a regular arrangement.

Yet further, in specific embodiments the stack comprises a plurality of n stacked layers, wherein n≥10, wherein the stack comprises at least five sets, each set comprising at least two layers with k≥2 openings configured in a regular arrangement. Hence, in embodiments the regular arrangements in the different sets may be the same. However, in other embodiments the regular arrangements of two or more of the at least five sets may differ from each other. They may e.g. differ in pitch, or amplitude, etc.. For instance, in embodiments n≥10, and at least 10 sets, each set comprising at least two layers with k≥2 openings configured in a regular arrangement. A regular arrangements may be more desirable. Further, a regular arrangement may also be used to have a more uniform distribution of the light. Yet further, in specific embodiments the stack may comprise a plurality of n stacked layers, wherein n≥10, wherein the stack may comprise at least five sets, each set comprising at least two layers with k≥2 openings (between stacked layers of the set), wherein the openings in the stack form a regular arrangement. Hence, in embodiments essentially all openings together form a regular arrangement.

The 3D item may comprise a plurality of openings, such as in average at least 1 per layer, like at least 2 per layers, even more especially at least 5 per layer, such as at least 7, like even more especially at least 10.

The openings may be used as physical openings (or channels) for allowing transmission of (visible) light. Alternatively or additionally, the openings may be used for transport of air, or another gas. In this way, also heat may be transported via the openings. Hence, the openings may also be used for improving thermal management, such as may be used when the 3D item is applied in a lighting device or luminaire, etc..

Especially, a 3D item may comprise at least 40 of such openings, even more especially at least 60, such as yet even more especially at least 70. This may provide a desirable optical effect. Further, it may provide a desirable appealing optical effect.

The 3D item may comprise at least one first layer and at least one second layer. Especially, however, the 3D item may comprise a least 5, even more especially at least 8, like yet even more especially at least 10 first layers and second layers.

The 3D printed item may comprise a plurality of layers on top of each other, i.e. stacked layers. The width (thickness) and height of (individually 3D printed) layers may e.g. in embodiments be selected from the range of 100-5000 µm, such as 200-2500 µm, with the height in general being smaller than the width. For instance, the ratio of height and width may be equal to or smaller than 0.8, such as equal to or smaller than 0.6.

Layers may be core-shell layers or may consist of a single material. Within a layer, there may also be a change in composition, for instance when a core-shell printing process was applied and during the printing process it was changed from printing a first material (and not printing a second material) to printing a second material (and not printing the first material).

At least part of the 3D printed item may include a coating.

Some specific embodiments in relation to the 3D printed item have already been elucidated above when discussing the method. Below, some specific embodiments in relation to the 3D printed item are discussed in more detail.

In embodiments, the 3D item may comprise two or more layers with each a regular pattern with a plurality of the modulations, wherein each of the layers comprises a stack axis (SA), wherein the patterns are identical but translated relative to one another along the stack axis (SA) of one of the two or more layers.

Yet further, in specific embodiment the 3D item may comprise two or more sets, each set comprising at least two layers with a regular pattern with a plurality of the openings (between adjacent layers), wherein each of the layers comprises a stack axis (SA), wherein at least two patterns are identical but translated relative to one another along the stack axis (SA) of one of the layers, wherein the regular patterns have a pitch (P). Especially, in embodiments the patterns may be translated relative to one another with a shift S, wherein S=x*P, wherein 0.4≤x≤0.6. In specific embodiments, 2^{∗}W≤P≤20^{∗}W, like in embodiments 2.5^{∗}W≤P≤10^{∗}W. As indicated herein, the value for the pitch may differ for different sets of first layers and second layers.

As indicated above, the layers have a layer width (W). Especially, in embodiments the first and second layers may comprise stack axes (SA), configured in a (optionally curved) plane, wherein the openings are defined by modulations from the respective layer relative to the respective stack axis (SA), wherein the modulations have an amplitude value (A) (relative to a stack axis (SA).

Especially, in specific embodiments 0.5^{∗}W<A≤10^{∗}W. Even more especially, 1^{∗}W<A≤5^{∗}W. Further, in specific embodiments the plurality of the modulations have a modulation width (W1) at half amplitude values (A), wherein 0.1^{∗}W≤W1≤10^{∗}W. Even more especially, 0.5^{∗}W≤W1≤5^{∗}W.

As indicated above, in specific (other) embodiments the layers have a layer height (H), wherein the plurality of the modulations have an amplitude value (A) (relative to a print path), wherein 0.5^{∗}H<A≤10^{∗}H. Even more especially, 1^{∗}H<A≤5^{∗}H. Further, especially in (other) embodiments the plurality of the modulations have a modulation width (W1) at half amplitude values (A), wherein 0.1^{∗}H≤W1≤10^{∗}H. Even more especially, 0.5^{∗}H≤W1≤5^{∗}H.

The stack axes together may define a (flat or curved) plane (or (planar or nonplanar) (cross-sectional) face.

Further, in embodiments the at least one of the first and second layers comprises a plurality of modulation s. In specific embodiments, two or more of the modulation s are configured symmetrical relative to the stack axis (SA), and/or two or more of the modulation s are configured asymmetrical relative to the stack axis (SA). Further, in embodiments a plurality of the modulation s may be configured in one or more of a block-shape arrangement, in a zig-zag arrangement, and in a meandering arrangement (see also above). Further, as can be derived from the above, in specific embodiments the (at least one of the first and second layers comprises a) plurality of the modulations have a pitch P. Especially, in embodiments 2^{∗}W≤P≤20^{∗}W, such as 2.5^{∗}W≤1≤15^{∗}W, like in embodiments 2.5^{∗}W≤P≤10^{∗}W.

Yet further, in embodiments the 3D item may comprise two or more layers each with a plurality of modulations, wherein the modulation s of at least two of the two or more layers are shifted relative to each other.

In specific embodiments, the 3D item comprises an item wall, wherein the item wall comprises the plurality of layers of 3D printed material comprising the plurality of the openings, wherein the plurality of the openings define openings between both sides of the item wall, wherein the layers have a layer width (W), wherein the openings (of the plurality of the openings) have a cross-sectional area having an equivalent circular diameter D, wherein a shortest distance (d2) between nearest neighboring openings is selected from the range of W≤d2≤20^{∗}D. In specific embodiments, the plurality of the openings (between both sides of the item wall) are configured in a regular arrangement.

Yet further, in embodiments wherein two or more layers each comprise a plurality of modulations, the layers may have a layer height (H), wherein for a set of two layers each with the plurality of modulations which are nearest neighboring layers of each other applies one or more of: (i) the modulations of both of the layers have a same pitch, but the modulations of the layers are shifted relative to each other, and (ii) nearest neighboring modulations in different layers of the set of two layers have a mutual distance (d1) of at least the layer height (H). Especially, in these embodiments the pitches may essentially be identical (though this is not necessarily the case). Further, especially in these embodiments the layer width of the first layer(s) and the second layer(s) may essentially be identical (though this is not necessarily the case). Further, especially in these embodiments the layer height of the first layer(s) and the second layer(s) may essentially be identical (though this is not necessarily the case). Further, especially in these embodiments the amplitudes of the deviations are essentially the same (though this is not necessarily the case).

The (with the herein described method) obtained 3D printed item may be functional *per se.* The thus obtained 3D item may (alternatively) be used for decorative or artistic purposes. The 3D printed item may include or be provided with a functional component. The functional component may especially be selected from the group consisting of an optical component, an electrical component, and a magnetic component. The term "optical component" especially refers to a component having an optical functionality, such as a lens, a mirror, a light transmissive element, an optical filter, etc... The term optical component may also refer to a light source (like a LED). The term "electrical component" may e.g. refer to an integrated circuit, PCB, a battery, a driver, but also a light source (as a light source may be considered an optical component and an electrical component), etc. The term magnetic component may e.g. refer to a magnetic connector, a coil, etc... Alternatively, or additionally, the functional component may comprise a thermal component (e.g. configured to cool or to heat an electrical component). Hence, the functional component may be configured to generate heat or to scavenge heat, etc...

As indicated above, the 3D printed item maybe used for different purposes. Amongst others, the 3D printed item maybe used in lighting. Hence, in yet a further aspect the invention also provides a lighting device comprising the 3D item as defined herein. In a specific aspect the invention provides a lighting system comprising (a) a light source configured to provide (visible) light source light and (b) the 3D item as defined herein, wherein 3D item may be configured as one or more of (i) at least part of a housing, (ii) at least part of a wall of a lighting chamber, and (iii) a functional component, wherein the functional component may be selected from the group consisting of an optical component, a support, an electrically insulating component, an electrically conductive component, a thermally insulating component, and a thermally conductive component. Hence, in specific embodiments the 3D item may be configured as one or more of (i) at least part of a lighting device housing, (ii) at least part of a wall of a lighting chamber, and (iii) an optical element. As a relative smooth surface may be provided, the 3D printed item may be used as mirror or lens, etc... In embodiments, the 3D item may be configured as shade. A device or system may comprise a plurality of different 3D printed items, having different functionalities.

Returning to the 3D printing process, a specific 3D printer may be used to provide the 3D printed item described herein. Therefore, in yet a further aspect the invention also provides a fused deposition modeling 3D printer, comprising (a) a printer head comprising a printer nozzle, and (b) a 3D printable material providing device configured to provide 3D printable material to the printer head, wherein the fused deposition modeling 3D printer is configured to provide said 3D printable material as described herein.

The printer nozzle may include a single opening. In other embodiments, the printer nozzle may be of the core-shell type, having two (or more) openings. The term "printer head" may also refer to a plurality of (different) printer heads; hence, the term "printer nozzle" may also refer to a plurality of (different) printer nozzles.

The 3D printable material providing device may provide a filament comprising 3D printable material to the printer head or may provide the 3D printable material as such, with the printer head creating the filament comprising 3D printable material. Hence, in embodiments the invention provides a fused deposition modeling 3D printer, comprising (a) a printer head comprising a printer nozzle, and (b) a filament providing device configured to provide a filament comprising 3D printable material to the printer head, wherein the fused deposition modeling 3D printer is configured to provide said 3D printable material to a substrate, as described herein.

Especially, the 3D printer comprises a controller (or is functionally coupled to a controller) that is configured to execute in a controlling mode (or "operation mode") the method as described herein. Instead of the term "controller" also the term "control system" (see e.g. above) may be applied.

The term "controlling" and similar terms especially refer at least to determining the behavior or supervising the running of an element. Hence, herein "controlling" and similar terms may e.g. refer to imposing behavior to the element (determining the behavior or supervising the running of an element), etc., such as e.g. measuring, displaying, actuating, opening, shifting, changing temperature, etc.. Beyond that, the term "controlling" and similar terms may additionally include monitoring. Hence, the term "controlling" and similar terms may include imposing behavior on an element and also imposing behavior on an element and monitoring the element. The controlling of the element can be done with a control system, which may also be indicated as "controller". The control system and the element may thus at least temporarily, or permanently, functionally be coupled. The element may comprise the control system. In embodiments, the control system and element may not be physically coupled. Control can be done via wired and/or wireless control. The term "control system" may also refer to a plurality of different control systems, which especially are functionally coupled, and of which e.g. one control system may be a master control system and one or more others may be slave control systems. A control system may comprise or may be functionally coupled to a user interface. The control system may also be configured to receive and execute instructions form a remote control. In embodiments, the control system may be controlled via an App on a device, such as a portable device, like a Smartphone or I-phone, a tablet, etc.. The device is thus not necessarily coupled to the lighting system, but may be (temporarily) functionally coupled to the lighting system. Hence, in embodiments the control system may (also) be configured to be controlled by an App on a remote device. In such embodiments the control system of the lighting system may be a slave control system or control in a slave mode. For instance, the lighting system may be identifiable with a code, especially a unique code for the respective lighting system. The control system of the lighting system may be configured to be controlled by an external control system which has access to the lighting system on the basis of knowledge (input by a user interface of with an optical sensor (e.g. QR code reader) of the (unique) code. The lighting system may also comprise means for communicating with other systems or devices, such as on the basis of Bluetooth, WIFI, LiFi, ZigBee, BLE or WiMAX, or another wireless technology. The system, or apparatus, or device may execute an action in a "mode" or "operation mode" or "mode of operation". Likewise, in a method an action or stage, or step may be executed in a "mode" or "operation mode" or "mode of operation" or "operational mode". The term "mode" may also be indicated as "controlling mode". This does not exclude that the system, or apparatus, or device may also be adapted for providing another controlling mode, or a plurality of other controlling modes. Likewise, this may not exclude that before executing the mode and/or after executing the mode one or more other modes may be executed. However, in embodiments a control system may be available, that is adapted to provide at least the controlling mode. Would other modes be available, the choice of such modes may especially be executed via a user interface, though other options, like executing a mode in dependence of a sensor signal or a (time) scheme, may also be possible. The operation mode may in embodiments also refer to a system, or apparatus, or device, that can only operate in a single operation mode (i.e. "on", without further tunability). Hence, in embodiments, the control system may control in dependence of one or more of an input signal of a user interface, a sensor signal (of a sensor), and a timer. The term "timer" may refer to a clock and/or a predetermined time scheme.

Instead of the term "fused deposition modeling (FDM) 3D printer" shortly the terms "3D printer", "FDM printer" or "printer" may be used. The printer nozzle may also be indicated as "nozzle" or sometimes as "extruder nozzle".

In yet a further aspect, the invention also provides a lighting device comprising the 3D item as defined herein, wherein the 3D item is configured as one or more of (i) at least part of a lighting device housing, (ii) at least part of a wall of a lighting chamber, and (iii) an optical element. Hence, the 3D item may be transmissive for part of the visible light. For instance, in this way of at least part of a lighting device housing transmissive for visible light may be provided and/or at least part of a wall of a lighting chamber may be provided that is transmissive for visible light.

In specific embodiments the 3D item comprises an item wall, wherein the item wall comprises the plurality of layers of 3D printed material, wherein the item wall comprises a plurality of openings between both sides of the item wall, wherein the plurality of openings are at least partly defined by a plurality of layer deviations.

For instance, there may be at least one opening per 10 cm² (of the item wall), such as at least one opening per 4 cm². In embodiments, there may be not more than 10 openings per cm², such as not more 5 openings, especially not more than about 2 openings per cm², like in embodiments about 1 opening per cm².

### BRIEF DESCRIPTION OF THE DRAWINGS

Embodiments of the invention will now be described, by way of example only, with reference to the accompanying schematic drawings in which corresponding reference symbols indicate corresponding parts, and in which:
Figs. 1a-1c schematically depict some general aspects of the 3D printer and of an embodiment of 3D printed material;
Figs. 2a-2e show some embodiments;
Figs. 3a-3c schematically depict some examples; and
Fig. 4 schematically depicts applications. The schematic drawings are not necessarily to scale.

### DETAILED DESCRIPTION OF THE EMBODIMENTS

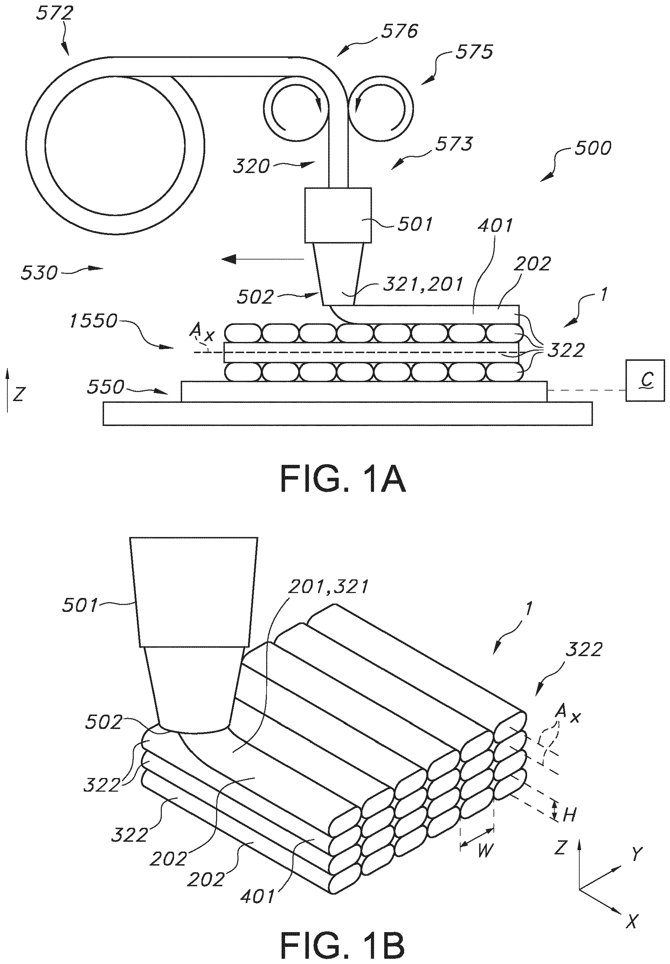

Fig. 1a schematically depicts some aspects of the 3D printer. Reference 500 indicates a 3D printer. Reference 530 indicates the functional unit configured to 3D print, especially FDM 3D printing; this reference may also indicate the 3D printing stage unit. Here, only the printer head for providing 3D printed material, such as an FDM 3D printer head is schematically depicted. Reference 501 indicates the printer head. The 3D printer of the present invention may especially include a plurality of printer heads (see below). Reference 502 indicates a printer nozzle. The 3D printer of the present invention may especially include a plurality of printer nozzles, though other embodiments are also possible. Reference 320 indicates a filament of printable 3D printable material (such as indicated above). For the sake of clarity, not all features of the 3D printer have been depicted, only those that are of especial relevance for the present invention (see further also below). Reference 321 indicates extrudate (of 3D printable material 201).

The 3D printer 500 is configured to generate a 3D item 1 by layer-wise depositing on a receiver item 550, which may in embodiments at least temporarily be cooled, a plurality of layers 322 wherein each layers 322 comprises 3D printable material 201, such as having a melting point Tₘ. The 3D printable material 201 may be deposited on a substrate 1550 (during the printing stage). By deposition, the 3D printable material 201 has become 3D printed material 202. 3D printable material 201 escaping from the nozzle 502 is also indicated as extrudate 321. Reference 401 indicates thermoplastic material.

The 3D printer 500 may be configured to heat the filament 320 material upstream of the printer nozzle 502. This may e.g. be done with a device comprising one or more of an extrusion and/or heating function. Such device is indicated with reference 573, and is arranged upstream from the printer nozzle 502 (i.e. in time before the filament material leaves the printer nozzle 502). The printer head 501 may (thus) include a liquefier or heater. Reference 201 indicates printable material. When deposited, this material is indicated as (3D) printed material, which is indicated with reference 202.

Reference 572 indicates a spool or roller with material, especially in the form of a wire, which may be indicated as filament 320. The 3D printer 500 transforms this in an extrudate 321 downstream of the printer nozzle which becomes a layer 322 on the receiver item or on already deposited printed material. In general, the diameter of the extrudate 321 downstream of the nozzle 502 is reduced relative to the diameter of the filament 322 upstream of the printer head 501. Hence, the printer nozzle is sometimes (also) indicated as extruder nozzle. Arranging layer 322 by layer 322 and/or layer 322t on layer 322, a 3D item 1 may be formed. Reference 575 indicates the filament providing device, which here amongst others include the spool or roller and the driver wheels, indicated with reference 576.

Reference A indicates a longitudinal axis or filament axis or axis of elongation of a layer of 3D printed material 202.

Reference C schematically depicts a control system, such as especially a temperature control system configured to control the temperature of the receiver item 550. The control system C may include a heater which is able to heat the receiver item 550 to at least a temperature of 50 °C, but especially up to a range of about 350 °C, such as at least 200 °C.

Alternatively or additionally, in embodiments the receiver plate may also be moveable in one or two directions in the x-y plane (horizontal plane). Further, alternatively or additionally, in embodiments the receiver plate may also be rotatable about z axis (vertical). Hence, the control system may move the receiver plate in one or more of the x-direction, y-direction, and z-direction.

Alternatively, the printer can have a head can also rotate during printing. Such a printer has an advantage that the printed material cannot rotate during printing.

Layers are indicated with reference 322, and have a layer height H and a layer width W.

Note that the 3D printable material is not necessarily provided as filament 320 to the printer head. Further, the filament 320 may also be produced in the 3D printer 500 from pieces of 3D printable material.

Reference D indicates the diameter of the nozzle (through which the 3D printable material 201 is forced).

Fig. 1b schematically depicts in 3D in more detail the printing of the 3D item 1 under construction. Here, in this schematic drawing the ends of the filaments 321 in a single plane are not interconnected, though in reality this may in embodiments be the case.

Reference H indicates the height of a layer. Layers are indicated with reference 203. Here, the layers have an essentially circular cross-section. Often, however, they may be flattened, such as having an outer shape resembling a flat oval tube or flat oval duct (i.e. a circular shaped bar having a diameter that is compressed to have a smaller height than width, wherein the sides (defining the width) are (still) rounded).

Hence, Figs. 1a-1b schematically depict some aspects of a fused deposition modeling 3D printer 500, comprising (a) a first printer head 501 comprising a printer nozzle 502, (b) a filament providing device 575 configured to provide a filament 321 comprising 3D printable material 201 to the first printer head 501, and optionally (c) a receiver item 550. In Figs. 1a-1b, the first or second printable material or the first or second printed material are indicated with the general indications printable material 201 and printed material 202, respectively. Directly downstream of the nozzle 502, the filament 321 with 3D printable material becomes, when deposited, layer 322 with 3D printed material 202.

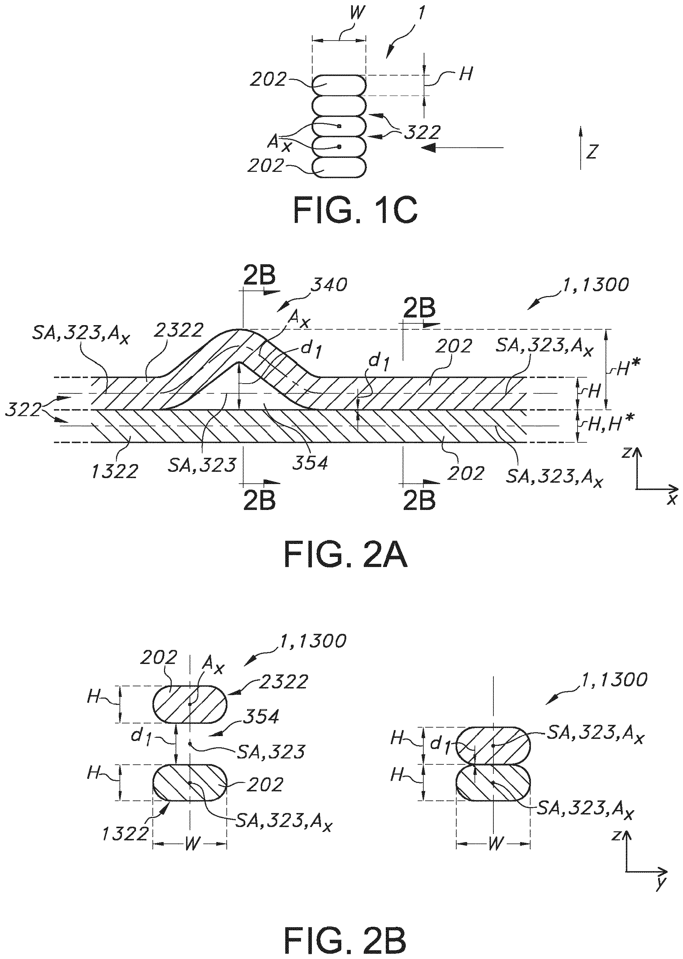

Fig. 1c schematically depicts a stack of 3D printed layers 322, each having a layer height H and a layer width W. Note that in embodiments the layer width and/or layer height may differ for two or more layers 322. Reference 252 in Fig. 1c indicates the item surface of the 3D item (schematically depicted in Fig. 1c).

Referring to Figs. 1a-1c, the filament of 3D printable material that is deposited leads to a layer having a height H (and width W). Depositing layer 322 after layer 322, the 3D item 1 is generated. Fig. 1c very schematically depicts a single-walled 3D item 1.

Fig. 2a schematically depicts the layer-wise deposition by 3D printing of layers 322 of 3D printed material 202. A stack 1300 of 2 layers is shown. Here, by way of example first the first layer 1322 may have been provided, and thereon the second layer 2322, with a modulation 340. The layer height is indicated with reference H and the layer width with reference W. Each layer has an axis of elongation A of the layer of 3D printed material 202. Note that these axes may also be curved. Further, reference 323 indicates a respective print path. Note that the stack may provide a face wherein all print paths 323 and/or axes of elongation A are comprised. Reference SA indicates a stack axis of a layer 322; each layer may comprise a stack axis SA. The stack axis may in embodiments be essentially parallel, which is here the case (see also Fig. 2b), though this is not necessarily the case. As can be seen on the right, the stack axes SA may define a cross-sectional plane (see also Fig. 2b). In embodiments, this plane may be planar, but in other embodiments this plane may be non-planer (i.e. a 1D or 2D curve plane). A cross-section is made at two different positions, which are schematically depicted in Fig. 2b. Further, note that in fact it is assumed that for these embodiments the layers are essentially on top of each other and are not curved (in the xy plane).

Hence, Figs. 2a-2b schematically depict (a result of) a method for producing a 3D item 1 by means of fused deposition modelling. The method comprises a 3D printing stage comprising layer-wise depositing 3D printable material (see also Figs. 1a-1c) to provide the 3D item 1 comprising 3D printed material 202. The 3D item 1 comprises a plurality of layers 322 of 3D printed material 202. The plurality of layers 322 comprises a stack 1300. The stack 1300 comprises a first layer 1322 and a second layer 2322 (which are configured adjacent to each other). Especially, the method comprises 3D printing the first layer 1322 and subsequently the second layer 2322 while providing a plurality of modulations 340 (here only one is depicted for the sake of understanding) in a z-direction in at least one of the first and second layers 1322,2322, thereby defining a plurality of openings 354 between the first and second layers 1322,2322 (in a plane comprising the z-axis). Hence, Figs. 2a-2b schematically depict an embodiment of a 3D item 1 comprising 3D printed material 202, wherein the 3D item 1 comprises a plurality of layers 322 of 3D printed material 202. The plurality of layers 322 comprises a stack 1300 of a first layer 1322 and a second layer 2322 (which are configured adjacent to each other), with a plurality of openings 354 between the first and second layers 1322,2322 (in a plane comprising the z-axis) due to local differences between interlayer distances d1 between the first and second layers 1322,2322.

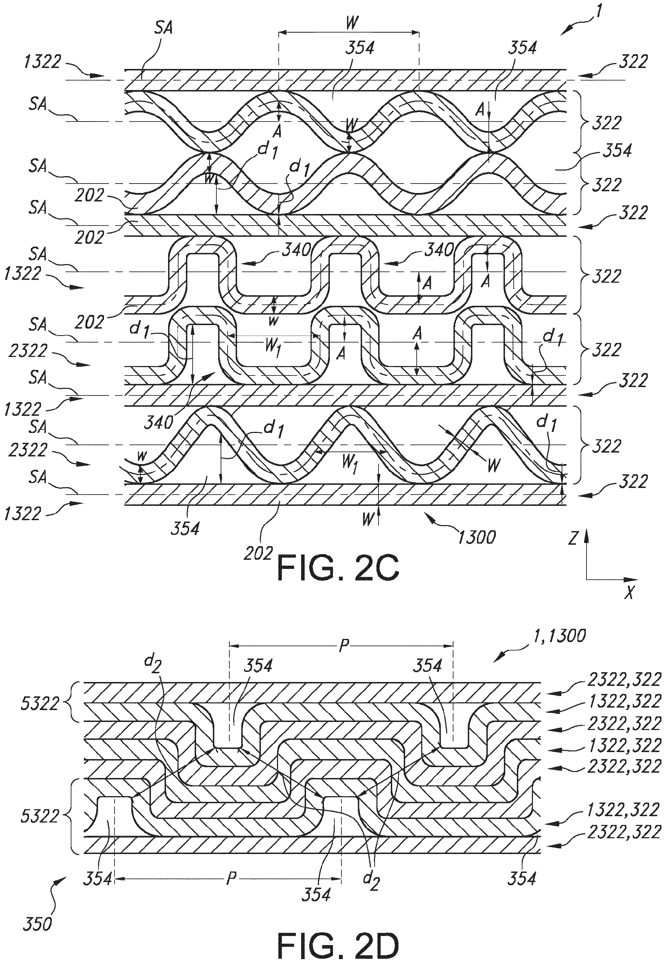

Figs. 2c-2e schematically depict some further aspects. Referring to this Figures (but also to Figs. 2a-2b), the layers 322 have a layer width W. Further, especially the modulations 340 have an amplitude value A (relative to a print path 323). Especially, 0.5^{∗}W<A≤10^{∗}W. The modulations 340 have a modulation width W1 at half amplitude values A. In embodiments, 0.1^{∗}W≤W1≤10^{∗}W.

In the cross-sectional view of Fig. 2b, it can also be seen that the same layers may at one position have a non-zero inter-layer distance d1 and at another positions have a zero inter-layer distance d1.

Figs. 2c-2d schematically depicts embodiments of results of a method comprising 3D printing at least one of the first and second layers 1322,2322 with a plurality of the modulations 340 in one or more of a block-shape way, in a zig-zag way, and in a meandering way. Here, for the sake of economy a plurality of different arrangements are shown.

The modulations 340 having a pitch P, wherein 2^{∗}W≤P≤20^{∗}W.

Amongst others, here also embodiments are depicted of a 3D printed item 1 being the result of a method comprising 3D printing two or more layers 322 each with a regular pattern comprising a plurality of the modulations 340, wherein the patterns are identical but translated relative to one another along a stack axis SA of one of the two or more layers 322 (see Fig. 2c (upper two sinusoidal type layers) and Fig. 2d). For instance, the patterns are translated relative to one another with a shift S, wherein S=x*P, wherein 0.4≤x≤0.6. Hence, the inter-layer distance may vary over (the length of) the layers 322.

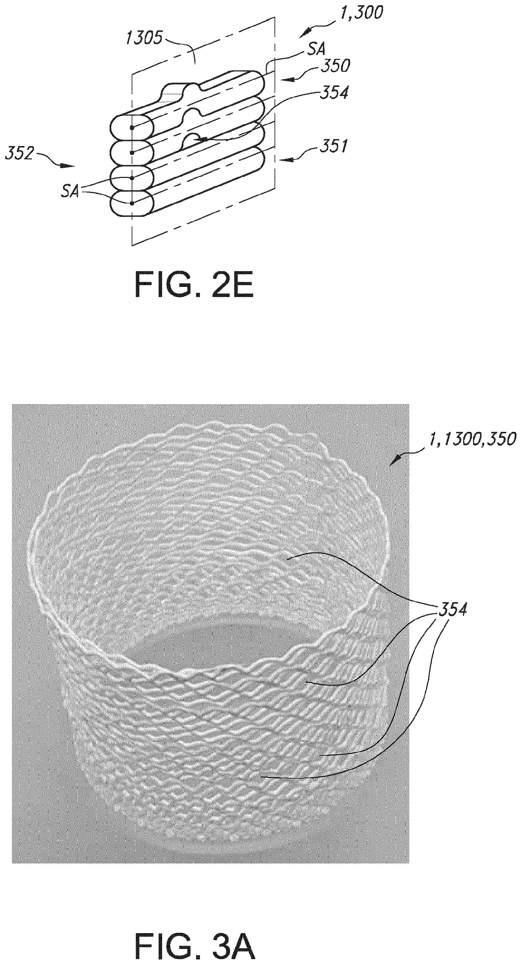

In embodiments, the 3D item 1 may comprise an item wall 350. The item wall 350 may comprise the plurality of layers 322 of 3D printed material 202. The plurality of the openings 354 may be configured between both sides of the item wall 350 (see also Fig. 2e).

Hence, the method may comprise 3D printing the plurality of modulations 340 in a regular arrangement to provide a regular arrangement of the openings 354 between both sides of the item wall 350.

As schematically depicted in Fig. 2d, the openings 354 (of the plurality of the openings 354) have a cross-sectional area having an equivalent circular diameter D, wherein a shortest distance d2 between nearest neighboring openings 354 is selected from the range of W≤d2≤20^{∗}D.

In embodiments, the 3D printing method may comprise a continuous 3D printing of the plurality of layers 322 with the one or more print path modulations 340.

Referring to Fig. 2e, the stack 1300 may comprise a virtual (optionally curved) stack plane 1305 configured parallel to the stacking of the layers 322 comprised by the stack 1300. The plurality of openings 354 (here only 1 is depicted) at least partly coincide with the stack plane 1305.

Referring to Figs. 2c and 2b, the stack 1300 may comprise a plurality of n stacked layers 322, wherein n≥5. In embodiments, the stack 1300 may comprise two or more sets 5322, each set comprising at least two layers 322 with the openings 354 (between stacked layers 322 of the set 5322), wherein the openings 354 in the stack 1300 form a regular arrangement. Especially, in embodiments the stack 1300 comprises a plurality of n stacked layers 322, wherein n>10. Especially, the stack 1300 may comprises at least five sets 5322, each set comprising at least two layers 322 with k≥2 openings 354 (between stacked layers 322 of the set 5322), wherein the openings 354 in the stack 1300 form a regular arrangement.

In embodiments, the 3D item 1 may comprise two or more sets 5322, each set comprising at least two layers 322 with a regular pattern with a plurality of the openings 354 (between adjacent layers). In embodiments, each of the layers 322 comprises a stack axis SA, wherein at least two patterns are identical but translated relative to one another along the stack axis SA of one of the layers 322, wherein the regular patterns have a pitch P. The patterns are translated relative to one another with a shift S, wherein S=x*P, wherein 0.4≤x≤0.6. As indicated above, the modulations 340 of at least one of the first and second layers 1322,2322 have a pitch P, wherein 2^{∗}W≤P≤20^{∗}W.

As indicated above, Figs. 2c-2d schematically depict embodiments of the 3D item 1 comprising two or more layers 322 with each a regular pattern with a plurality of the modulations 340, wherein each of the layers 322 comprises a stack axis SA, wherein the patterns are identical but translated relative to one another along the stack axis SA of one of the two or more layers 322.

Figs 2c-2d also schematically depicted embodiments of the 3D item 1 comprising an item wall 350, wherein the item wall 350 comprises the plurality of layers 322 of 3D printed material 202 comprising the plurality of the openings 354. The plurality of the openings 354 define openings between both sides of the item wall 350 (see also Fig 2e). The layers 322 have a layer width W. The openings 354 (of the plurality of the openings 354) have a cross-sectional area having an equivalent circular diameter D. A shortest distance d2 between nearest neighboring openings 354 may selected from the range of W≤d2≤20^{∗}D.

Especially, the plurality of the openings 354 (between both sides of the item wall 350) may be configured in a regular arrangement.

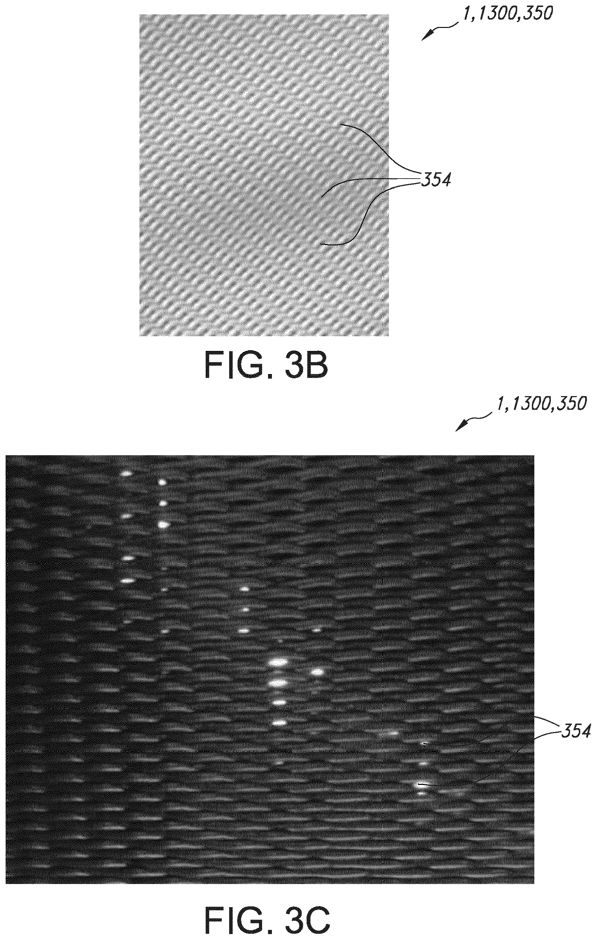

Figs. 3a-3c show some examples, with Fig. 3a depicting 3D printed material being white, with Fig. 3b depicting 3D printed material being light transmissive. Hence, the 3D printed material 202 may be transmissive for at least part of the visible light (especially having a wavelength selected from the range of 380-780 nm). Fig. 3b depicts 3D printed material being black. All wall elements comprise a plurality of holes.

A benefit of printing holes in combination with artificial light inside the structure may be that when looking towards the lamp, the shape of the light beams are broken by the transparent round shape printed lines, in such a way that a 'a vertical high intensity' area is visible on the surface of the lamp. The light beams may be broken in an essentially random direction. The light may be spread homogenously over the surface.

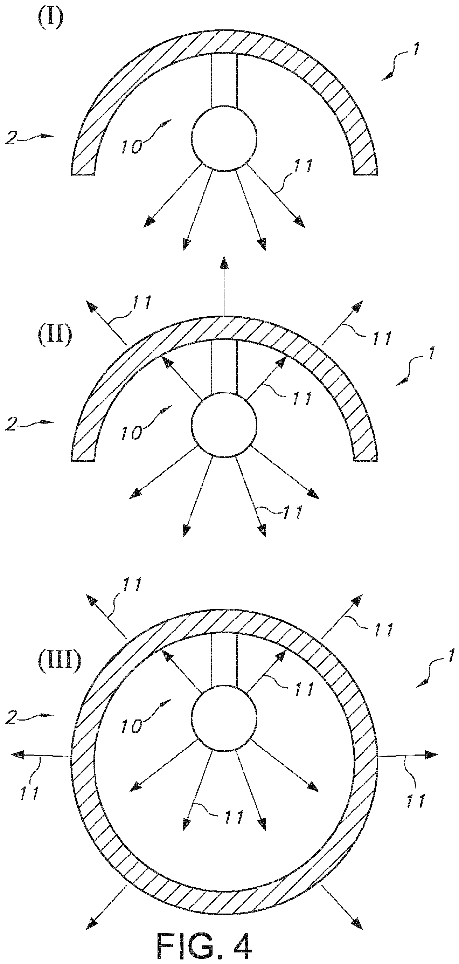

Fig. 4 schematically depicts an embodiment of a lamp or luminaire, indicated with reference 2, which comprises a light source 10 for generating light 11. The lamp may comprise a housing or shade or another element, which may comprise or be the 3D printed item 1 (of which several embodiments are described above). Here, the half sphere (in cross-sectional view) schematically indicates a housing or shade. The lamp or luminaire may be or may comprise a lighting device (which comprises the light source 10). Therefore, the term lighting device may refer to a lamp or a luminaire, and may thus be indicated with reference 2. Hence, in specific embodiments the lighting device comprises the 3D item 1. The 3D item 1 may be configured as one or more of (i) at least part of a lighting device housing, (ii) at least part of a wall of a lighting chamber, and (iii) an optical element. Hence, the 3D item may in embodiments be reflective for light source light 11 and/or transmissive for light source light 11. Here, the 3D item may e.g. be a housing or shade. The housing or shade comprises the item part 400. For possible embodiments of the item part 400, see also above. Fig. 4 schematically depict several embodiments, wherein in the first embodiment I, the transmissivity of the 3D item 1 is relatively small, and in the other embodiments II and III, the transmissivity is larger.

Fig. 4, like e.g. also Figs. 2c, 2d, and 3a-3c, schematically depict embodiments of possible texture perforations.

In embodiments, the 3D item may comprise a regular pitch per 3D printed level. In embodiments, the 3D item may comprise a regular pitch for at least 10 3D printed levels, more preferably at least 13, most preferably at least 15.

In embodiments, the 3D item may comprise a first 3D printed level comprising a first material, and a second 3D printed level comprising a second material different from the first material.

In embodiments, the 3D item may comprise a first 3D printed level comprising a first color, and a second 3D printed level comprising a second color different from the first color.

In embodiments, the pitch P may be preferably W<P<3W, more especially 1.2W<P<2.7W, most especially 1.5W<P<2.5W such as for example P=2.

The term "plurality" refers to two or more.

The terms "substantially" or "essentially" herein, and similar terms, will be understood by the person skilled in the art. The terms "substantially" or "essentially" may also include embodiments with "entirely", "completely", "all", etc. Hence, in embodiments the adjective substantially or essentially may also be removed. Where applicable, the term "substantially" or the term "essentially" may also relate to 90% or higher, such as 95% or higher, especially 99% or higher, even more especially 99.5% or higher, including 100%.

The term "comprise" includes also embodiments wherein the term "comprises" means "consists of'.

The term "and/or" especially relates to one or more of the items mentioned before and after "and/or". For instance, a phrase "item 1 and/or item 2" and similar phrases may relate to one or more of item 1 and item 2. The term "comprising" may in an embodiment refer to "consisting of" but may in another embodiment also refer to "containing at least the defined species and optionally one or more other species".

Furthermore, the terms first, second, third and the like in the description and in the claims, are used for distinguishing between similar elements and not necessarily for describing a sequential or chronological order. It is to be understood that the terms so used are interchangeable under appropriate circumstances and that the embodiments of the invention described herein are capable of operation in other sequences than described or illustrated herein.

It should be noted that the above-mentioned embodiments illustrate rather than limit the invention, and that those skilled in the art will be able to design many alternative embodiments without departing from the scope of the appended claims.

In the claims, any reference signs placed between parentheses shall not be construed as limiting the claim.

Use of the verb "to comprise" and its conjugations does not exclude the presence of elements or steps other than those stated in a claim. Unless the context clearly requires otherwise, throughout the description and the claims, the words "comprise", "comprising", and the like are to be construed in an inclusive sense as opposed to an exclusive or exhaustive sense; that is to say, in the sense of "including, but not limited to".

The article "a" or "an" preceding an element does not exclude the presence of a plurality of such elements.

The invention may be implemented by means of hardware comprising several distinct elements, and by means of a suitably programmed computer. In a device claim, or an apparatus claim, or a system claim, enumerating several means, several of these means may be embodied by one and the same item of hardware. The mere fact that certain measures are recited in mutually different dependent claims does not indicate that a combination of these measures cannot be used to advantage.

The invention also provides a control system that may control the device, apparatus, or system, or that may execute the herein described method or process. Yet further, the invention also provides a computer program product, when running on a computer which is functionally coupled to or comprised by the device, apparatus, or system, controls one or more controllable elements of such device, apparatus, or system.

The invention further applies to a device, apparatus, or system comprising one or more of the characterizing features described in the description and/or shown in the attached drawings. The invention further pertains to a method or process comprising one or more of the characterizing features described in the description and/or shown in the attached drawings.

The various aspects discussed in this patent can be combined in order to provide additional advantages. Further, the person skilled in the art will understand that embodiments can be combined, and that also more than two embodiments can be combined. Furthermore, some of the features can form the basis for one or more divisional applications.

It goes without saying that one or more of the first (printable or printed) material and second (printable or printed) material may contain fillers such as glass and fibers which do not have (to have) influence on the on T_{g} or Tₘ of the material(s).

Amongst others, the invention provides in embodiments a method wherein 3D printed layers are stacked, but wherein at one or more positions at least one layer is modulated. Hence, the one layer may deviate in a z-direction from the layer below but may also return back on the layer below. This may be over a relatively small length. The excursions or modulations are chosen such, that there is a (small) opening between the lower layer and the layer in a plane of the layers. In this way, a 3D printed item comprising a stack of layers may have (physical) openings, which allow transmission of light. In general, the layer height of the layers is not adapted. The deviations or excursions may be provided in a regular way. This may provide a 3D printed with a regular arrangement of openings. Note that not each layer of the 3D printed item necessarily includes such deviations or excursions.

## Claims

1. A method for producing a 3D item (1) by means of fused deposition modelling, the method comprising a 3D printing stage comprising layer-wise depositing 3D printable material (201) to provide the 3D item (1) comprising 3D printed material (202), wherein the 3D item (1) comprises a plurality of layers (322) of 3D printed material (202), wherein the plurality of layers (322) comprises a stack (1300), wherein the stack (1300) comprises a first layer (1322) and a second layer (2322), wherein the method comprises:
- 3D printing the first layer (1322) and subsequently the second layer (2322) while providing a regular pattern comprising a plurality of modulations (340) in a z-direction in each of the first and second layers (1322,2322), thereby defining a plurality of openings (354) between the first and second layers (1322,2322), the z-direction being the direction in which the layers (322) are 3D printed on top of each other, the regular patterns being identical but translated relative to one another along a stack axis (SA) of one of the first and second layers (1322,2322),
wherein the layers (322) have a layer width W and the plurality of modulations (340) have a pitch P,
wherein the regular patterns are translated relative to one another with a shift S, and
wherein 2^{∗}W≤P≤20^{∗}W and S=x*P, wherein 0.4≤x≤0.6.

2. The method according to claim 1, wherein the layers (322) have a layer width W, wherein the plurality of the modulations (340) have an amplitude value A, wherein 0.5^{∗}W<A≤10^{∗}W, wherein the plurality of the modulations (340) have a modulation width W1 at half amplitude values A, wherein 0.5^{∗}W≤W1≤10^{∗}W.

3. The method according to any one of the preceding claims, comprising 3D printing at least one of the first and second layers (1322,2322) with a plurality of the modulations (340) in one or more of a block-shape way, in a zig-zag way, and in a meandering way.

4. The method according to any one of the preceding claims, wherein the 3D printable material (201) is transmissive for at least part of the visible light.

5. The method according to any one of the preceding claims, wherein the 3D item (1) comprises an item wall (350), wherein the item wall (350) comprises the plurality of layers (322) of 3D printed material (202), wherein the method comprises providing a plurality of layers (322) with the plurality of the openings (354) between both sides of the item wall (350).

6. The method according to any one of the preceding claims, wherein the layers (322) have a layer width W, wherein the openings (354) have a cross-sectional area having an equivalent circular diameter D, wherein a shortest distance d2 between nearest neighboring openings (354) is selected from the range of W≤d2≤20^{∗}D.

7. A 3D item (1) obtained by the method according to any one of claims 1 to 6, wherein the stack (1300) comprises a plurality of n stacked layers (322), wherein n≥10, wherein the stack (1300) comprises at least five sets (5322), each set comprising at least two layers (322) with k≥2 openings (354) configured in a regular arrangement.

8. The 3D item (1) according to claim 7, wherein the first and second layers (1322,2322) comprise stack axes (SA), configured in a plane, wherein the openings (354) are defined by modulations (340) from the respective layer (1322,2322) relative to the respective stack axis (SA), wherein the modulations (340) have an amplitude value A, wherein 0.5^{∗}<A≤10^{∗}W, wherein the plurality of the modulations (340) have a modulation width W1 at half amplitude values A, wherein 0.1^{∗}W≤W1≤10^{∗}W.

9. The 3D item (1) according to claim 8, wherein the plurality of the modulations (340) of at least one of the first and second layers (1322,2322) are configured in one or more of a block-shape arrangement, a zig-zag arrangement, and a meandering arrangement.

10. The 3D item (1) according to any one of the preceding claims 7-9, wherein the 3D printed material (202) is transmissive for at least part of the visible light.

11. The 3D item (1) according to any one of the preceding claims 7-10, wherein the 3D item (1) comprises an item wall (350), wherein the item wall (350) comprises the plurality of layers (322) of 3D printed material (202) comprising the plurality of the openings (354), wherein the plurality of the openings (354) define openings between both sides of the item wall (350), wherein the openings (354) have a cross-sectional area having an equivalent circular diameter D, wherein a shortest distance d2 between nearest neighboring openings (354) is selected from the range of W≤d2≤20^{∗}D.

12. A lighting device (2) comprising the 3D item (1) according to any one of the preceding claims 7-10, wherein the 3D item (1) is configured as one or more of (i) at least part of a lighting device housing, (ii) at least part of a wall of a lighting chamber, and (iii) an optical element.

## Patentansprüche

1. Verfahren zum Herstellen eines 3D-Elements (1) mittels Schmelzschichtung, das Verfahren umfassend eine 3D-Druckstufe, umfassend ein schichtweises Abscheiden von 3D-druckbarem Material (201), um das 3D-Element (1) bereitzustellen, umfassend 3D-gedrucktes Material (202), wobei das 3D-Element (1) eine Vielzahl von Schichten (322) von 3D-gedrucktem Material (202) umfasst, wobei die Vielzahl von Schichten (322) einen Stapel (1300) umfasst, wobei der Stapel (1300) eine erste Schicht (1322) und eine zweite Schicht (2322) umfasst, wobei das Verfahren umfasst:
- 3D-Drucken der ersten Schicht (1322) und anschließend der zweiten Schicht (2322), während ein regelmäßiges Muster bereitgestellt wird, umfassend eine Vielzahl von Modulationen (340) in einer z-Richtung in jeder der ersten und der zweiten Schicht (1322, 2322), wodurch eine Vielzahl von Öffnungen (354) zwischen der ersten und der zweiten Schicht (1322, 2322) definiert wird, wobei die z-Richtung die Richtung ist, in der die Schichten (322) übereinander gedruckt werden, wobei die regelmäßigen Muster identisch sind, aber relativ zueinander entlang einer Stapelachse (SA) einer der ersten und der zweiten Schicht (1322, 2322) übertragen werden,
wobei die Schichten (322) eine Schichtbreite W aufweisen und die Vielzahl von Modulationen (340) eine Steigung P aufweisen,
wobei die regelmäßigen Muster mit einer Verschiebung S relativ zueinander übertragen werden, und
wobei 2*W≤P≤20*W und S=x*P, wobei 0,4≤x≤0,6 ist.

2. Verfahren nach Anspruch 1, wobei die Schichten (322) eine Schichtbreite W aufweisen, wobei die Vielzahl der Modulationen (340) einen Amplitudenwert A aufweist, wobei 0,5*W<A<10*W, wobei die Vielzahl der Modulationen (340) eine Modulationsbreite W1 bei Halbamplitudenwerten A aufweist, wobei 0, 5*W< W1 < 10*W.

3. Verfahren nach einem der vorstehenden Ansprüche, umfassend das 3D-Drucken mindestens einer der ersten und der zweiten Schicht (1322, 2322) mit einer Vielzahl der Modulationen (340) in einer oder mehreren von einer Blockformweise, in einer Zickzackweise und in einer mäanderförmigen Weise umfasst.

4. Verfahren nach einem der vorstehenden Ansprüche, wobei das 3D-druckbare Material (201) für mindestens einen Teil des sichtbaren Lichts durchlässig ist.

5. Verfahren nach einem der vorstehenden Ansprüche, wobei das 3D-Element (1) eine Elementwand (350) umfasst, wobei die Elementwand (350) die Vielzahl von Schichten (322) des 3D-gedruckten Materials (202) umfasst, wobei das Verfahren ein Bereitstellen einer Vielzahl von Schichten (322) mit der Vielzahl der Öffnungen (354) zwischen beiden Seiten der Elementwand (350) umfasst.

6. Verfahren nach einem der vorstehenden Ansprüche, wobei die Schichten (322) eine Schichtdicke W aufweisen, wobei die Öffnungen (354) eine Querschnittsfläche aufweisen, die einen äquivalenten kreisförmigen Durchmesser D aufweist, wobei ein kürzester Abstand d2 zwischen nächsten benachbarten Öffnungen (354) aus dem Bereich von W≤d2≤20*D ausgewählt wird.

7. 3D-Element (1), das durch das Verfahren nach einem der Ansprüche 1 bis 6 erhalten wird,
wobei der Stapel (1300) eine Vielzahl von n gestapelten Schichten (322) umfasst, wobei n≥10 ist, wobei der Stapel (1300) mindestens fünf Sätze (5322) umfasst, jeder Satz umfassend mindestens zwei Schichten (322) mit k≥2 Öffnungen (354), die in einer regelmäßigen Anordnung konfiguriert sind.

8. 3D-Element (1) nach Anspruch 7, wobei die erste und die zweite Schicht (1322, 2322) Stapelachsen (SA) umfassen, die in einer Ebene konfiguriert sind, wobei die Öffnungen (354) durch Modulationen (340) von der jeweiligen Schicht (1322, 2322) relativ zu der jeweiligen Stapelachse (SA) definiert sind, wobei die Modulationen (340) einen Amplitudenwert A aufweisen, wobei 0,5*W<A≤10*W, wobei die Vielzahl der Modulationen (340) eine Modulationsbreite W1 bei Halbamplitudenwerten A aufweisen, wobei 0,1*W≤W1≤10*W ist.

9. 3D-Element (1) nach Anspruch 8, wobei die Vielzahl der Modulationen (340) von mindestens einer der ersten und der zweiten Schicht (1322, 2322) in einer oder mehreren von einer blockförmigen Anordnung, einer Zickzackanordnung und einer mäanderförmigen Anordnung konfiguriert sind.

10. 3D-Element (1) nach einem der vorstehenden Ansprüche 7 bis 9, wobei das 3D-gedruckte Material (202) für mindestens einen Teil des sichtbaren Lichts durchlässig ist.

11. 3D-Element (1) nach einem der vorstehenden Ansprüche 7 bis 10, wobei das 3D-Element (1) eine Elementwand (350) umfasst, wobei die Elementwand (350) die Vielzahl von Schichten (322) aus 3D-gedrucktem Material (202) umfasst, umfassend die Vielzahl der Öffnungen (354), wobei die Vielzahl der Öffnungen (354) Öffnungen zwischen beiden Seiten der Elementwand (350) definiert, wobei die Öffnungen (354) eine Querschnittsfläche aufweisen, die einen äquivalenten kreisförmigen Durchmesser D aufweist, wobei ein kürzester Abstand d2 zwischen nächsten benachbarten Öffnungen (354) aus dem Bereich von W≤d2≤20*D ausgewählt wird.

12. Beleuchtungsvorrichtung (2), umfassend das 3D-Element (1) nach einem der vorstehenden Ansprüche 7 bis 10, wobei das 3D-Element (1) als eines oder mehrere von (i) mindestens einem Teil eines Beleuchtungsvorrichtungsgehäuses, (ii) mindestens einem Teil einer Wand einer Beleuchtungskammer, und (iii) einem optischen Element konfiguriert ist.

## Revendications

1. Procédé de production d'un article 3D (1) au moyen d'une modélisation par dépôt fondu, le procédé comprenant une étape d'impression en 3D comprenant le dépôt par couche d'un matériau imprimable en 3D (201) pour fournir l'article 3D (1) comprenant un matériau imprimé en 3D (202), dans lequel l'article 3D (1) comprend une pluralité de couches (322) de matériau imprimé en 3D (202), dans lequel la pluralité de couches (322) comprend un empilement (1300), dans lequel l'empilement (1300) comprend une première couche (1322) et une seconde couche (2322), dans lequel le procédé comprend :
- l'impression en 3D de la première couche (1322) et par la suite de la seconde couche (2322) tout en fournissant un motif régulier comprenant une pluralité de modulations (340) dans une direction z dans chacune des première et seconde couches (1322, 2322), définissant ainsi une pluralité d'ouvertures (354) entre les première et seconde couches (1322, 2322), la direction z étant la direction dans laquelle les couches (322) sont imprimées en 3D les unes au-dessus des autres, les motifs réguliers étant identiques mais translatés les uns par rapport aux autres le long d'un axe d'empilement (SA) de l'une parmi les première et seconde couches (1322, 2322),
dans lequel les couches (322) ont une largeur de couche W et la pluralité de modulations (340) ont un pas P,
dans lequel les motifs réguliers sont translatés l'un par rapport à l'autre avec un décalage S, et
dans lequel 2 * W ≤ P ≤ 20 * W et S = x * P, où 0,4 ≤ x ≤ 0,6.

2. Procédé selon la revendication 1, dans lequel les couches (322) ont une largeur de couche W, dans lequel la pluralité de modulations (340) ont une valeur d'amplitude A, dans lequel 0,5 * W < A ≤ 10 * W, dans lequel la pluralité de modulations (340) ont une largeur de modulation W1 à des valeurs de demi-amplitude A, dans lequel 0,5 * W ≤ W1 ≤ 10 * W.

3. Procédé selon l'une quelconque des revendications précédentes, comprenant l'impression en 3D d'au moins l'une parmi les première et seconde couches (1322, 2322) avec une pluralité de modulations (340) selon une ou plusieurs parmi une forme en bloc, une forme en zigzag et une forme en méandres.

4. Procédé selon l'une quelconque des revendications précédentes, dans lequel le matériau imprimable en 3D (201) est transmissif pour au moins une partie de la lumière visible.

5. Procédé selon l'une quelconque des revendications précédentes, dans lequel l'article 3D (1) comprend une paroi d'article (350), dans lequel la paroi d'article (350) comprend la pluralité de couches (322) de matériau imprimé en 3D (202), dans lequel le procédé comprend la fourniture d'une pluralité de couches (322) avec la pluralité d'ouvertures (354) entre les deux côtés de la paroi d'article (350).

6. Procédé selon l'une quelconque des revendications précédentes, dans lequel les couches (322) ont une largeur de couche W, dans lequel les ouvertures (354) ont une aire en coupe transversale ayant un diamètre circulaire équivalent D, dans lequel une distance la plus courte d2 entre des ouvertures voisines les plus proches (354) est choisie dans la plage de W ≤ d2 ≤ 20 * D.

7. Article 3D (1) obtenu par le procédé selon l'une quelconque des revendications 1 à 6,
dans lequel l'empilement (1300) comprend une pluralité de n couches empilées (322), dans lequel n ≥ 10, dans lequel l'empilement (1300) comprend au moins cinq ensembles (5322), chaque ensemble comprenant au moins deux couches (322) avec k ≥ 2 ouvertures (354) conçues dans un agencement régulier.

8. Article 3D (1) selon la revendication 7, dans lequel les première et seconde couches (1322, 2322) comprennent des axes d'empilement (SA), conçus dans un plan, dans lequel les ouvertures (354) sont définies par des modulations (340) à partir de la couche respective (1322, 2322) par rapport à l'axe d'empilement respectif (SA), dans lequel les modulations (340) ont une valeur d'amplitude A, dans lequel 0,5 * W < A ≤ 10 * W, dans lequel la pluralité de modulations (340) ont une largeur de modulation W1 à des valeurs de demi-amplitude A, dans lequel 0,1 * W ≤ W1 ≤ 10 * W.

9. Article 3D (1) selon la revendication 8, dans lequel la pluralité de modulations (340) d'au moins l'une parmi les première et seconde couches (1322, 2322) sont conçues selon un ou plusieurs parmi un arrangement en forme de bloc, un arrangement en zigzag et un arrangement en méandres.

10. Article 3D (1) selon l'une quelconque des revendications précédentes 7 à 9, dans lequel le matériau imprimé en 3D (202) est transmissif pour au moins une partie de la lumière visible.

11. Article 3D (1) selon l'une quelconque des revendications précédentes 7 à 10, dans lequel l'article 3D (1) comprend une paroi d'article (350), dans lequel la paroi d'article (350) comprend la pluralité de couches (322) de matériau imprimé en 3D (202) comprenant la pluralité d'ouvertures (354), dans lequel la pluralité d'ouvertures (354) définit des ouvertures entre les deux côtés de la paroi d'article (350), dans lequel les ouvertures (354) ont une aire en coupe transversale ayant un diamètre circulaire équivalent D, dans lequel une distance la plus courte d2 entre des ouvertures voisines les plus proches (354) est choisie dans la plage de W ≤ d2 ≤ 20 * D.

12. Dispositif d'éclairage (2) comprenant l'article 3D (1) selon l'une quelconque des revendications précédentes 7 à 10, dans lequel l'article 3D (1) est conçu en tant qu'un ou plusieurs parmi (i) au moins une partie d'un logement de dispositif d'éclairage, (ii) au moins une partie d'une paroi d'une chambre d'éclairage, et (iii) un élément optique.
